# EUROPEAN PATENT APPLICATION

(11) **EP 4 369 520 A1**
(43) Date of publication of application: **15.05.2024**
(21) Application number: 22838017.6
(22) Date of filing: 07.07.2022
(51) Int. Cl.: H01Q 3/36, H01Q 1/38, F16H 19/04, F16H 57/039

(54) **PHASE SHIFTER AND COMMUNICATION DEVICE INCLUDING SAME**

(30) Priority: 08.07.2021 KR 20210089916
(71) Applicant: KMW Inc., Hwaseong-si, Gyeonggi-do 18462 (KR)
(72) Inventor: SO, Sung Hwan, Hwaseong-si Gyeonggi-do 18477 (KR); CHOI, Oh Seog, Hwaseong-si Gyeonggi-do 18430 (KR); KANG, Seong Man, Hwaseong-si Gyeonggi-do 18430 (KR); YANG, Hyoung Seok, Hwaseong-si Gyeonggi-do 18377 (KR); SEO, Yong Won, Daejeon 34513 (KR); GANG, Cha Gun, Hwaseong-si Gyeonggi-do 18416 (KR)
(74) Representative: SJW Patentanwälte
(86) International application number: PCT/KR2022/009857
(87) International publication number: WO 2023/282665

(57) **Abstract**

The present disclosure relates to a phase shifter and a communication device including the same, and particularly, to a phase shifter including a base panel; a fixed substrate which is laminated and fixed on one side or another side on the base panel and has a plurality of circuit patterns printed on the top surface thereof; and a phase shift switching part provided with a plurality of movable substrates including movable strip terminal which are in contact with the plurality of circuit patterns of the fixed substrate, wherein the phase shift switching part is configured to reciprocate the plurality of movable substrates within a predetermined distance in a horizontal direction on the base panel to change the positions of contact points of the movable substrates with respect to the circuit patterns, wherein the phase shift switching part moves the plurality of movable substrates while elastically supporting the plurality of movable substrates toward the circuit patterns, thereby providing an advantage of maximizing the space utilization.

## Description

### [Technical Field]

The present disclosure relates to a phase shifter and a communication device including the same, and more particularly to a phase shifter and a communication device including the same, which minimize the height from one surface of a fixed substrate to improve the space utilization of an antenna device, and which reduce the overall weight.

### [Background Art]

Antenna devices are most efficient in terms of coverage when they form beams in the horizontal direction, but it is necessary sometimes to adjust the beam angle in the vertical direction for a reason such as interference, loss or the like. In this case, the beam angle of the antenna device is adjusted in the vertical direction through a mechanical beam tilting method or an electrical beam tilting method.

The mechanical beam tilting method is one in which the beam angle is adjusted by directly installing the antenna device at a downward angle. Although it is a simple method, this method is disadvantageously somewhat cumbersome for various reasons, such as workers visiting the site, turning off the power during work and the like.

The electrical beam tilting method is based on a multi line phase shifter (MLPS). Specifically, according to the electrical beam tilting method, the beam angle is adjusted by feeding signals with different phases to a plurality of vertically arranged radiating elements.

In order to implement the electrical beam tilting method, the antenna device may be provided with a phase shifter. The phase shifter delays the input signal appropriately so that a phase difference occurs between the input signal and the output signal. At this time, the delay of the input signal can be implemented by changing the length of a transmission line or changing the signal transmission speed within the transmission line.

Korean Unexamined Patent Application Publication No. 2010-0122005 (hereinafter, referred to as 'Patent Document 1'), which relates to a conventional phase shifter, discloses a fixed substrate having one input port and a plurality of output ports, and a movable substrate provided with a variable strip. However, Patent Document 1 has a disadvantage in that space efficiency is reduced because the fixed substrate and the movable substrate are provided only on one side surface of the phase shifter.

Meanwhile, recently, multi-band frequency antenna devices capable of servicing various bands have been widely used as base stations or repeaters in mobile communication systems. The multi-band antenna devices are required to individually adjust the phases of multiple band frequencies. Therefore, the number of phase shifters provided in the antenna device may increase, and accordingly, the phase shifters need to be miniaturized and weight reduced.

### [Disclosure]

### [Technical Problem]

The present disclosure was conceived to solve the above-described technical problems, and its object is to provide a miniaturized and weight reduced phase shifter and a communication device including the same.

In addition, another object of the present disclosure is to provide a phase shifter and a communication device including the same, which enable the precise phase difference adjustment since a set of reduction gears is equipped thereto so as to precisely reciprocate and horizontally move a movable rod, and which can maximize the space utilization of the product since a phase shift switching part can be placed slimly on a base panel.

The technical drawbacks which this disclosure addresses are not limited to the aforementioned ones, but unmentioned other technical drawbacks which can be solved by this disclosure will become apparent to those skilled in the art from the description below.

### [Solution to Problem]

One embodiment of a phase shifter according to the present disclosure includes a base panel; a fixed substrate which is laminated and fixed on one side or another side on the base panel and has a plurality of circuit patterns printed on the top surface thereof; and a phase shift switching part provided with a plurality of movable substrates including movable strip terminals which are in contact with the plurality of circuit patterns of the fixed substrate, wherein the phase shift switching part is configured to reciprocate the plurality of movable substrates within a predetermined distance in a horizontal direction on the base panel to change the positions of contact points of the movable substrates with respect to the circuit patterns, and wherein the phase shift switching part moves the plurality of movable substrates while always elastically supporting the plurality of movable substrates toward the circuit patterns.

Here, the plurality of circuit patterns may be printed on the fixed substrate in a form in which the length of a transmission line is changed according to a change in the contact point position of the movable substrate.

Also, the plurality of circuit patterns may be formed to branch from one input terminal to two output terminals, and a movable strip terminal of the movable substrate may change the length of the transmission line leading to the two branched output terminals.

Additionally, the phase shifter may include a plurality of movable substrate installing parts with end portions on which the plurality of movable substrates are seated and installed, respectively; a module rod connecting the plurality of movable substrate installing parts in module units; a movable rod extending straight from the module rod in the reciprocation moving direction; and a moving drive part which moves the movable rod in the reciprocation moving direction.

Further, the fixed substrate may be distributively disposed as one side fixed substrate and another side fixed substrate on both opposite sides of the moving drive part located in the central region of the base panel in the reciprocation moving direction, wherein the plurality of movable substrate installing parts and the module rods may be provided adjacent to the one side fixed substrate and said another side fixed substrate, respectively, and wherein the movable rod may simultaneously receive a driving force from the moving drive part, and simultaneously move the plurality of movable substrate installing parts in the same direction.

In addition, an elastic member may be interposed between the plurality of movable substrate installing parts and the movable substrate to elastically support the movable substrate toward the circuit pattern.

Further, the elastic member may include a leaf spring.

Additionally, the moving drive part may include a drive motor driven electrically; a set of reduction gears that receives a driving force from the drive motor and reduces speed; and a rack gear part having rack gear teeth formed on one side thereof, and provided on the movable rod such that one gear of the set of reduction gears meshes with the rack gear teeth.

Further, the drive motor may be provided as a step motor capable of controlling rotation in one direction or another direction.

Further, the set of reduction gears may be a combination of a plurality of parallel gears meshed with each other in various combinations of gear ratios, and be provided in a gear box.

Further, one gear of the combination of the plurality of parallel gears may be provided as a worm wheel gear including worm wheel gear teeth provided to mesh with a worm gear coupled to the rotation shaft of the drive motor.

Further, on the base panel, at least one guide bracket may be installed to prevent the movable rod from being deviated and to guide the reciprocation moving of the movable rod.

One embodiment of the communication device according to the present disclosure may include the above-described phase shifter.

### [Advantageous Effects]

According to the phase shifter and the communication device including the same according to the present disclosure, the following various effects can be achieved.

First, since the set of reduction gears is provided to precisely reciprocate and horizontally move the movable rod, it is possible to create the effect of precise phase difference adjustment.

Second, since the phase shift switching part can be placed slimly on the base panel, it is possible to create the effect of maximizing the space utilization of the product.

### [Description of Drawings]

FIG. 1 is a perspective view showing an embodiment of a phase shifter according to the present disclosure,
FIGS. 2A and 2B are exploded perspective views of FIG. 1,
FIG. 3 is a top view of FIG. 1, and
FIG. 4 is a side view of FIG. 1,
FIGS. 5A and 5B are a cross-sectional view (a) and a cutaway view (b) taken along line A-A of FIG. 3, each also showing a partially enlarged view, and
FIG. 6 is a perspective view representing the phase shift switching part in the structure of FIG. 1,
FIGS. 7A and 7B are top views of FIG. 1, which visually show changes in the overlap length between the circuit pattern and the movable substrate before and after phase shift, and
FIGS. 8A and 8B are top views of FIG. 1, showing configurations before and after phase shifts corresponding to the maximum and minimum.

### [Explanation of symbols]

| | | | |
|---|---|---|---|
| 1: | Phase shifter | 10: | Base panel |
| 20A, 20B: | Fixed substrate | 30: | Circuit pattern |
| 40: | Movable substrate | 41: | Fixing protrusion |
| 43: | Elastic member | 100: | Phase shift switching part |
| 110: | Movable substrate installing part | 111: | Fixing hole |
| | | | |
| 115: | Guide slot | 117: | Guide rod |
| 120: | Module rod | 121: | Module connection part |
| 123: | Integrated connection part | 130: | Movable rod |
| | | | |
| 140A, 140B: | Guide bracket | 150: | Moving drive part |
| 151: | Gear box | 152: | Box cover |
| 153: | Drive motor | 153c: | Rotation shaft |
| 154: | Worm gear | 155 - 159: | Set of reduction gears |
| 155: | Worm wheel gear | 158: | Parallel gear combination |
| | | | |
| 159: | Pinion gear | 160: | Rack gear part |

### [Mode for Invention]

Hereinafter, a phase shifter according to an embodiment of the present disclosure will be described in detail with reference to the accompanying drawings.

In adding reference numerals to components of each drawing, it should be noted that the same components have the same reference numerals as much as possible even if they are shown on different drawings. In addition, in describing an embodiment of the present disclosure, if it is determined that a detailed description of a related known configuration or function may prevent the understanding of the embodiment of the present disclosure, the detailed description thereof will be omitted.

In describing the components of an embodiment of the present disclosure, terms such as first, second, A, B, (a), (b), and the like may be used. These terms do not limit the nature, sequence, order or the like of the corresponding components. Further, unless otherwise defined, all terms used herein, including technical or scientific terms, have the same meaning as commonly understood by a person of ordinary skill in the art to which the present disclosure pertains. Terms, such as those defined in a commonly used dictionary, should be interpreted as having a meaning that is consistent with the meaning in the context of the related technology, and will not to be interpreted in an idealized or excessively formal sense unless expressly so defined in this application.

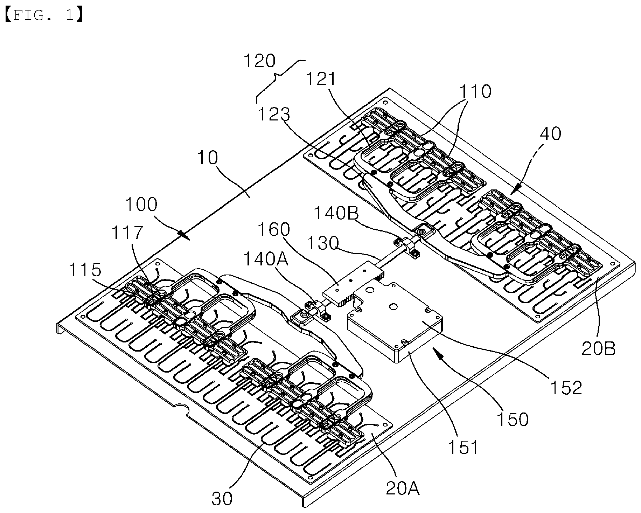

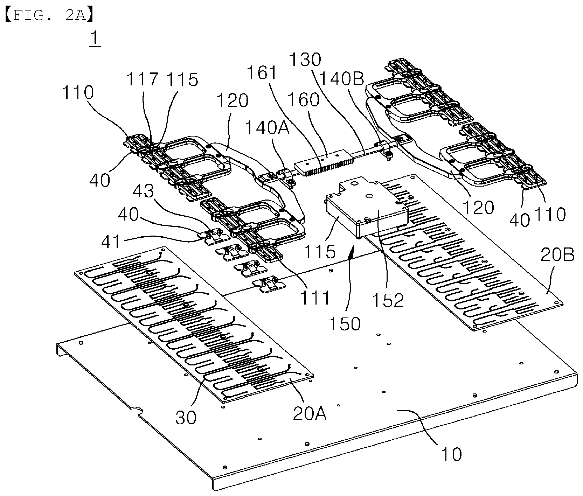

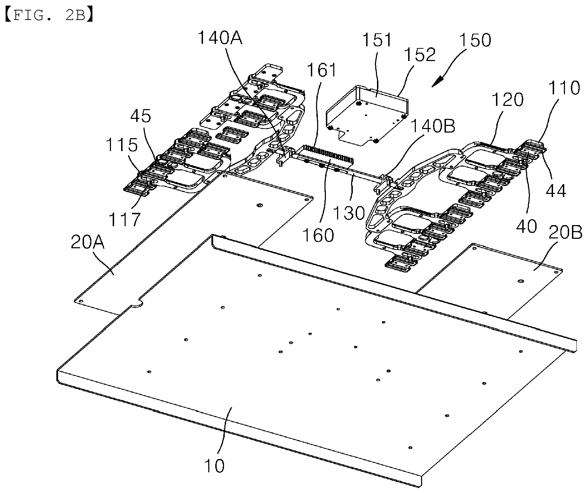

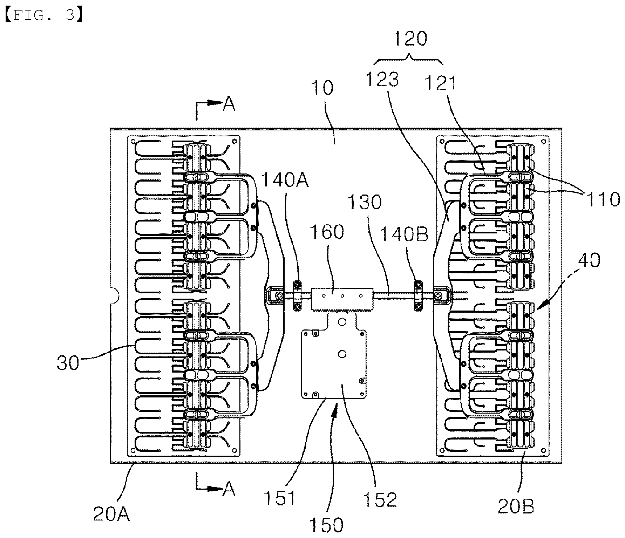

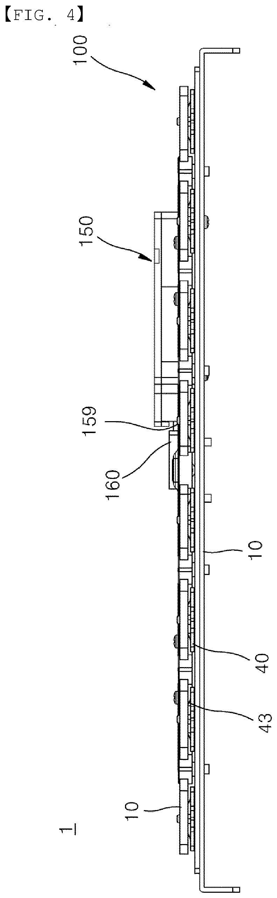

FIG. 1 is a perspective view showing an embodiment of a phase shifter according to the present disclosure, FIGS. 2A and 2B are exploded perspective views of FIG. 1, FIG. 3 is a top view of FIG. 1, and FIG. 4 is a side view of FIG. 1.

A phase shifter 1 according to an embodiment of the present disclosure includes, as shown in FIGS. 1 to 4, a base panel 10; fixed substrates 20A and 20B, each of which is stacked and fixed onto one side or another side of the base panel 10 and has a plurality of circuit patterns 30 printed on the top surface thereof; and a phase shift switching part 100 provided with a plurality of movable substrates 40 which are in contact with the plurality of circuit patterns 30 of the fixed substrates 20A and 20B, wherein the phase shift switching part is configured to reciprocate the plurality of movable substrates 40 within a predetermined distance in a horizontal direction on the base panel 10 to change the positions of the contact points of the movable substrates 40 with respect to the circuit patterns 30.

Referring to FIGS. 1 to 4, the fixed substrates 20A and 20B may be fixed to one surface (top surface in the drawings) of the base panel 10. In this regard, when it is assumed that the base panel 10 is provided in a substantially rectangular parallelepiped shape, the pair of fixed substrates 20A and 20B may be arranged adjacent to one short side and the other short side of the base panel respectively to be spaced apart from each other.

The fixed substrates 20A and 20B may be provided as ordinary printed circuit substrates, and the above-described plurality of circuit patterns 30 may be printed on one surface (upper surface in the drawings) using a method such as etching or the like. The plurality of circuit patterns 30 may be formed on the fixed substrates 20A and 20B to be spaced apart from each other in a number corresponding to the number of movable strip terminals 44 (which will be described later) formed on the lower surface of the plurality of movable substrates 40, and may be made of a material that is electrically coupled to the movable strip terminal 44.

Here, eight pairs of circuit patterns 30 may be provided on each of the fixed substrates 20A and 20B, and eight movable substrates 40 described above may also be provided to be movable on each of the fixed substrates 20A and 20B. Therefore, in cases where two fixed substrates 20A and 20B are provided on one base panel 10, a total of sixteen circuit patterns 30 can be printed, and a total of sixteen movable substrates 40 can also be provided.

The plurality of circuit patterns 30 may be connected to at least one input port 30A and a plurality of output ports 30B-1 and 30B-2. Additionally, the plurality of circuit patterns 30 may share at least one input port 30A with each other, or each of the plurality of circuit patterns 30 may be provided with an input port 30A.

Each circuit pattern 30 of the fixed substrates 20A and 20B may be coupled to the movable strip terminal 44 of the corresponding movable substrate 40, thereby forming a plurality of transmission lines.

The signal received through the input port 30A may be transmitted to each of the output ports 30B-1 and 30B-2 through each transmission line implemented with each of the circuit patterns 30. The signal delivered to each of the output ports 30B-1 and 30B-2 may be transmitted to an antenna element (not shown), which is one of the components of each communication device, through an RF cable or RF connector.

When the movable substrates 40 are moved on the one surfaces (upper surfaces) of the fixed substrates 20A and 20B, the movable strip terminals 44 provided on the lower surfaces of the movable substrates 40 are also moved while being in contact with the plurality of circuit patterns 30. In this way, by changing the contact positions of the movable strip terminals 44 of the movable substrates 40 with respect to the plurality of circuit patterns 30, the physical length of each transmission line can be shortened or lengthened, thereby enabling the adjustment of the phase difference between signals transmitted through the respective transmission lines.

The base panel 10 may be made of Teflon material, which has a low loss rate in a high frequency environment. However, the material of the base panel 10 is not necessarily limited to this, but it is possible to form the base panel 10 with other materials.

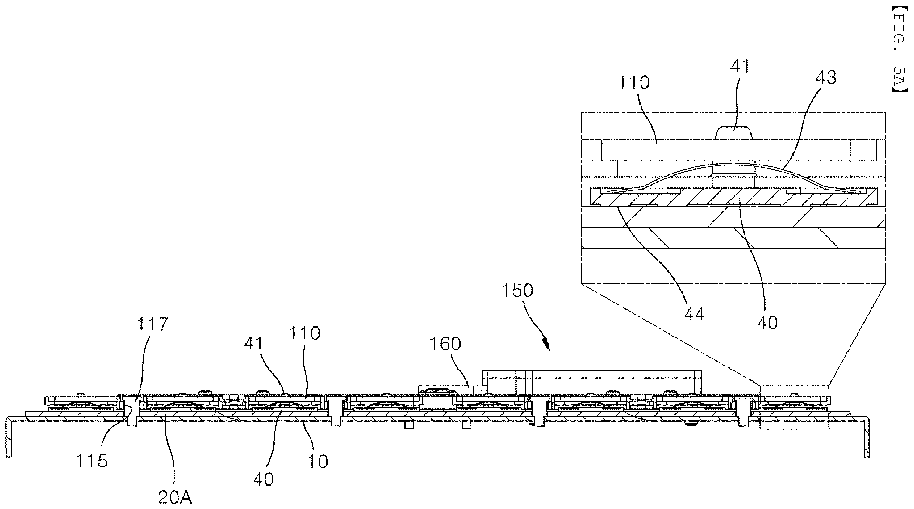

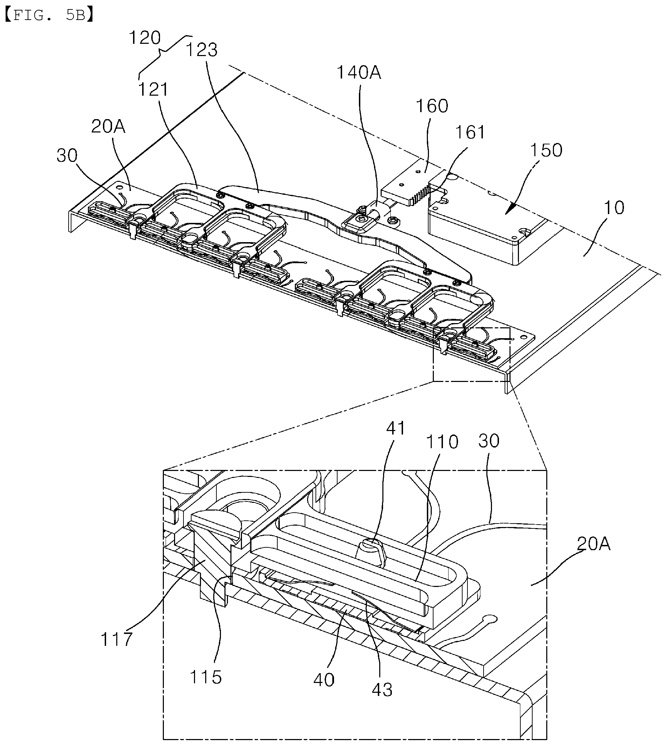

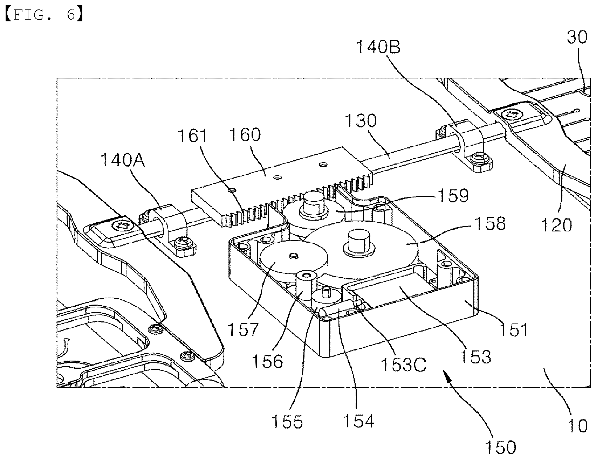

FIGS. 5A and 5B are a cross-sectional view (a) and a cutaway view (b) taken along line A-A of FIG. 3, each also showing a partially enlarged view, and FIG. 6 is a perspective view representing the phase shift switching part in the structure of FIG. 1.

Referring to FIGS. 1 to 4, the phase shift switching part 100 may include a plurality of movable substrate installing parts 110 with end portions on which the plurality of movable substrates 40 are seated and installed, respectively, module rods 120 connecting the plurality of movable substrate installing parts 110 in module units, a movable rod 130 extending straight from the module rods 120 in a reciprocation moving direction, and a moving drive part 150 that moves the movable rod 130 in the reciprocation moving direction.

More specifically, as shown in FIGS. 2A and 2B, the plurality of movable substrate installing parts 110 may be arranged such that a single movable substrate 40 is installed at a position corresponding to each of the plurality of circuit patterns 30, and each of the movable substrates 40 may be fitted to the bottom surface of each of the end portions of the plurality of movable substrate installing parts 110 via a pair of fixing protrusions 41.

At this time, the upper end portion of each of the pair of fixing protrusions 41 is provided with a protrusion having a diameter greater than that of a fixing hole 111 formed to penetrate the movable substrate installing part 110, so that it can fix the movable substrate 40 to the movable substrate installing part 110 by being forcedly fitted into the fixing hole 111, and since the length of the fixing protrusion 41 is formed to be larger than that of the fixing hole 111, the movable substrate 40 can be installed to be movable within the limit limited by the protrusion of the fixing protrusion 41 in the vertical direction.

The protrusion of the fixing protrusion 41 may have a slit (not shown) of a predetermined depth formed at the distal end so that the protrusion can be deformed by an interference force when being inserted into the fixing hole 111, and so that the diameter of the protrusion of the fixing protrusion 41 can be reduced by the deformation thereof, enabling the smooth insertion thereof into the fixing hole 111 when being fitted into the fixing hole 111.

In this regard, on the upper surface of the movable substrate 40, there may be prepared an elastic member 43 which is provided as a leaf spring convexly protruding toward the lower surface of the movable substrate installing part 110, and due to the elastic support force of the elastic member 43, the movable substrate 40 can be always elastically supported toward the fixed substrate 20A or 20B on which the plurality of circuit patterns 30 are formed, so that the movable strip terminal 44 of the movable substrate 40 can be continuously in close contact with the circuit pattern 30 of the fixed substrate 20A or 20B.

Meanwhile, as shown in FIGS. 2A and 2B, the plurality of movable substrate installing parts 110 may be connected to each other in each module by at least two module rods 120. For example, in cases where a total of eight movable substrates 40 are provided on each of the fixed substrates 20A and 20B, there may be provided two movable substrate installing parts 110, on each of which four movable substrates 40 are installed in each module, and the two movable substrate installing parts 110 may be together connected to one module rod 120.

The module rod 120 may include module connection parts 121, each of which is branched and connected to three points of each of the two movable substrate installing parts 110, and an integrated connection part 123 which integrates and connects the respective module connection parts 121. To the center of the integrated connection part 123, the movable rod 130 may be connected.

In this way, the movable substrates 40, the movable substrate installing parts 110, and the module rods 120 may be provided in each module on one side fixed substrate and the other side fixed substrate 20A and 20B, and one end and the other end of the movable rod 130 may be respectively connected to the centers of the integrated connection parts 123 of the module rods 120. Therefore, when the movable rod 130 is moved in the above-mentioned reciprocation moving direction, the movable substrates 40 on the one side fixed substrate and the other side fixed substrate 20A and 20B are moved in the same direction, so that the above-mentioned phase difference can be adjusted.

Meanwhile, in the module rod 120, by cutting it in the up and down direction, at least one guide slot 115 may be formed. The guide slot 115 may be formed to have a length that limits the change from the position where the transmission line is the shortest to the position where the transmission line is the longest when the movable substrate 40 changes the contact point position on the circuit pattern 30 described above. In one embodiment of the present disclosure, the description will be presented as two guide slots 115 being provided in each of the two module rods 120 to be spaced apart from each other. However, it is not necessary that only two guide slots 115 are formed in one module rod 120, and it is possible to form three or more slots in one module rod.

In each of the at least one guide slot 115, a guide rod 117 fixed to the base panel 10 may be installed. The guide rod 117 may penetrate the guide slot 115 in the up and down direction and be fixed to the base panel 10 via a screw, and it may be provided with an upper end portion having a countersunk head shape which has a diameter sufficient to support the edge of the guide slot 115.

Accordingly, the guide rod 117 and the guide slot 115 can guide the reciprocation moving of the module rod 120 and the movable substrate installing part 110 according to the reciprocation horizontal moving of the movable rod 130, and at the same time, can prevent the module rod 120 and the movable substrate installing part 110 from being deviated or lifted excessively from the base panel 10.

In this case, the movable substrate installing part 110 is elastically supported upward by the elastic member 43 installed between the movable substrate 40 and itself, and thus there may be a concern of causing the movable substrate installing part to be moved irregularly from the fixed substrate 20A or 20B, but as described above, the countersunk head-shaped guide rod 117 is supported on the edge of the guide slot 115, so that the movable substrate installing part 110, the module rod 120, and the movable rod 130 can be stably and horizontally maintained.

In this regard, on the base panel 10, at least one guide bracket 140A or 140B may be installed to prevent the movable rod 130 from being deviated and to guide the reciprocation moving of the movable rod. The guide brackets 140A and 140B may be provided such that both end portions of the movable rod 130 penetrate the guide brackets, and may be provided in a pair so as to support portions adjacent to the respective ends of the movable rod 130 penetrating the guide brackets.

More specifically, the guide brackets 140A and 140B may include one side guide bracket 140A provided such that one end of the movable rod 130 adjacent to one side fixed substrate 20A is installed therethrough, and the other side guide bracket 140B provided such that the other end of the movable rod 130 adjacent to the other side fixed substrate 20B is installed therethrough.

The one side guide bracket 140A and the other side guide bracket 140B are coupled to the base panel 10 via screws, and serve to guide the reciprocation moving of the movable rod 130 through them in the horizontal direction.

In addition, the one side guide bracket 140A and the other side guide bracket 140B may perform the function of preventing the entire module rods 120 including the movable substrate installing parts 110 from being excessively spaced from the one side fixed substrate 20A and the other side fixed substrate 20B by the elastic members 43 interposed between the movable substrates 40 and the movable substrate installing parts.

As shown in FIG. 6, the phase shift switching part 100 may further include a moving drive part 150 that moves the movable rod 130 horizontally in the reciprocation moving direction.

As shown in FIG. 6, the moving drive part 150 may include a drive motor 153 provided inside a gear box 151 and driven electrically, a set of reduction gears 155 to 159 that receives a driving force from the drive motor 153 and reduces the speed, and a rack gear part 160 having rack gear teeth 161 formed on one side thereof, and provided on the movable rod 130 such that one gear (pinion gear 159) of the set of reduction gears 155 to 159 meshes with the rack gear teeth 161.

The rotation shaft 153c of the drive motor 153 may be disposed inside the gear box 151 in parallel to the movable rod 130, and a worm gear 154 having worm gear teeth may be coupled to the rotation shaft 153c of the drive motor 153.

Meanwhile, the set of reduction gears 155 to 159 may include a worm wheel gear 155 provided with worm wheel gear teeth to mesh with the worm gear teeth of the worm gear 154 coupled to the rotation shaft 153c of the drive motor 153, a pinion gear 159 meshed with the rack gear part 160 provided on the movable rod 130, and a gear group set between the worm wheel gear 155 and the pinion gear 159, in which a combination of at least three two-stage parallel gears 156 to 158 meshed with each other at various gear ratios reduces and transmits the driving force of the drive motor 153.

In this way, the set of reduction gears 155 to 159 can reduce the driving force of the drive motor 153 to an appropriate reduction ratio by combining a plurality of gear ratios including the worm wheel gear 155 and the pinion gear 159, and so can precisely control the movement distance of the movable rod 130, and it is also possible to adjust the phase difference more precisely through controlling the movement distance of the movable rod 130.

In this regard, the drive motor 153 is preferably provided as a step motor capable of controlling rotation in one direction or the other direction. The principle of adjusting the phase difference by controlling the rotation of the drive motor 153 provided as a step motor will be described in more detail when describing the communication device including the phase shifter 1 according to an embodiment of the present disclosure.

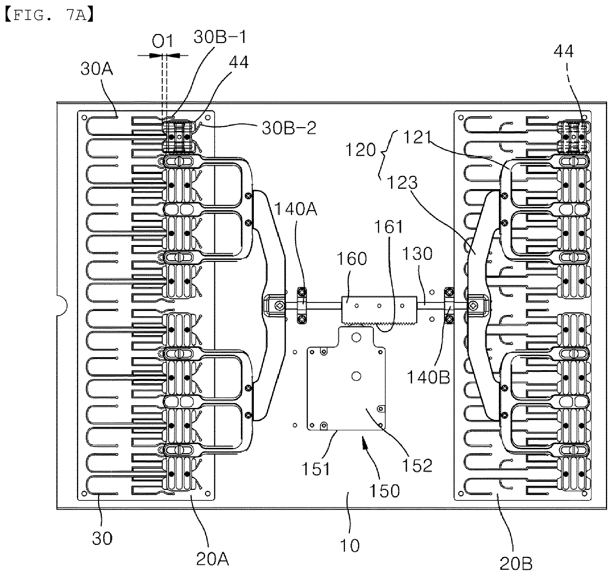

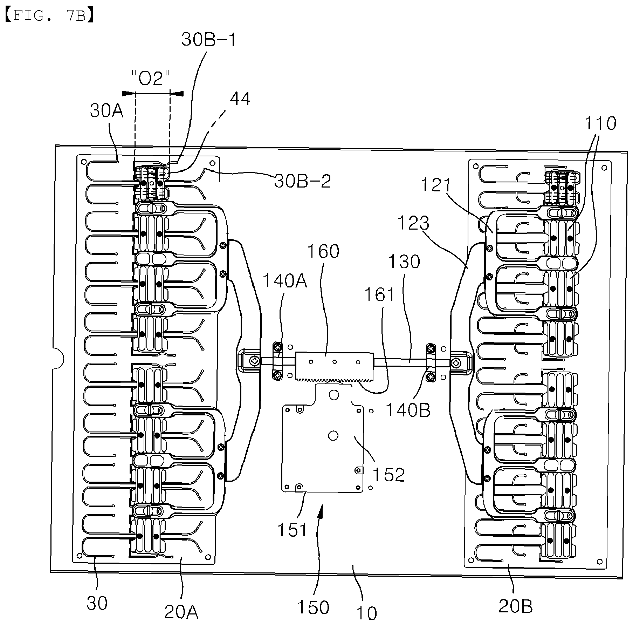

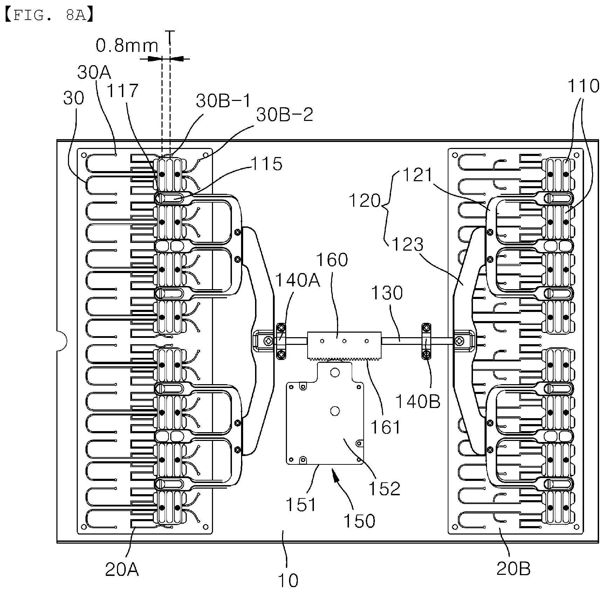

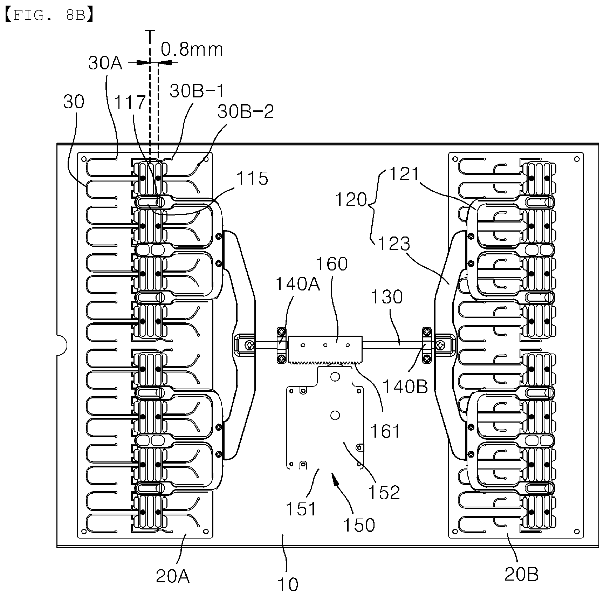

FIGS. 7A and 7B are top views of FIG. 1, which visually show changes in the overlap length between the circuit pattern and the movable substrate before and after phase shift, and FIGS. 8A and 8B are top views of FIG. 1, showing configurations before and after phase shifts corresponding to the maximum and minimum.

Although not shown in the drawings, the phase shifter 1 according to an embodiment of the present disclosure may be included in a communication device capable of shifting the phase value to enable beamforming with improved gain (+3dB) through multiple antenna sub-arrays among the configurations of antenna devices that reflect MIMO (Multiple Input Multiple Output) technology.

MIMO technology, which is a technology that dramatically increases data transmission capacity by using multiple antenna sub-arrays, is a spatial multiplexing technique in which the transmitter transmits different data through respective transmission antennas, and the receiver distinguishes the received data through appropriate signal processing. Therefore, as the numbers of transmitting and receiving antennas increase simultaneously, channel capacity increases, allowing more data to be transmitted. For example, if the number of antennas is increased to ten, approximately 10 times the channel capacity is secured using the same frequency band compared to a single antenna system.

In particular, the antenna device may arrange TRx modules (not shown) that perform transmitter and receiver functions in the up and down vertical direction (V) and in the left and right horizontal direction (H), and a plurality of antenna elements may be arranged to be electrically connected to each TRx module. Here, the channel capacity built for each TRx module can be redefined with an "RF chain", and can be redefined with an "antenna sub-array" as a group part of antenna elements in which a plurality of antenna elements are arranged for antenna beam forming.

Multiple RF chains may be constructed in the V direction, and at this time, three or more antenna sub-arrays for each RF chain may be arranged in the V direction.

Here, each RF chain may be constructed through a transmission line to branch from one input terminal to two output terminals, and an antenna sub-array may be arranged at each output terminal. However, it should be noted that a separate additional antenna sub-array can be constructed, without being limited to this, so that the output phase difference realizes a linear phase value.

In particular, in the phase shifter 1 according to an embodiment of the present disclosure, the transmission line may be implemented in the form of the circuit patterns 30 printed on the one side fixed substrate 20A and the other side fixed substrate 20B, and the input terminal may be implemented as the input port 30A of a feeding signal, while the two output terminals may be implemented as the output ports 30B-1 and 30B-2 of the feeding signal, and the transmission line may have a structure in which power is fed while the physical length of the transmission line is changed by the movable strip terminal 44 of the movable substrate 40.

In this way, the radiation beam of an antenna sub-array or the like radiating with a phase value shifted by the phase shifter 1 according to an embodiment of the present disclosure may be capable of implementing beam forming with a gain of +3 dB improved compared to the conventional case where the beam is radiated through an antenna sub-array for each RF chain instead of branching from the input terminal of each RF chain to two output terminals.

Hereinafter, the process of changing the physical length of the transmission line using the phase shifter 1 according to an embodiment of the present disclosure will be briefly described with reference to the accompanying drawings (particularly, FIGS. 7A to 8B).

For example, as shown in FIG. 7A, when the drive motor 153 is rotated in one side, the movable rod 130 is moved to the right in the drawing and the plurality of movable substrates 40 are simultaneously moved to the right, while the contact point positions can be changed to the right on the circuit patterns 30 to increase the lengths of the transmission lines, and the adjustment of the phase difference according to the contact point position is completed.

At this time, the overlap length between the movable strip terminal 44 of the movable substrate 40 and the circuit pattern 30 may correspond to the reference notation "O1 (Overlap 1)" in FIG. 7A, and the length of the movable strip terminal 44 excluding the length corresponding to twice O1 may be an increment contributing to the existing transmission line.

Additionally, as shown in FIG. 7B, when the drive motor 153 is rotated in the other side, the movable rod 130 is moved to the left in the drawing and the plurality of movable substrates 40 are simultaneously moved to the left, while the contact point positions can be changed to the left on the circuit patterns 30 to increase the lengths of the transmission lines, and the adjustment of the phase difference according to the contact point position is completed.

At this time, the overlap length between the movable strip terminal 44 of the movable substrate 40 and the circuit pattern 30 may correspond to the reference notation "O2 (Overlap 2)" in FIG. 7B, and the length of the movable strip terminal 44 excluding the length corresponding to twice O2 may be an increment contributing to the existing transmission line.

For reference, the movable rod 130 has the reciprocation moving distance limited by the guide rod 117 provided in the above-described guide slot 115, and, as shown in FIGS. 8A and 8B, the movable rod can be designed to form the longest and shortest transmission lines on the circuit pattern 30 when being moved 0.8 mm to one side and the other side, respectively, under the assumption that the guide rod 117 is located at the center of the guide slot 115 (see reference notation "T" in FIGS. 8A and 8B) .

The communication device according to an embodiment of the present disclosure may be configured to include any one of the phase shifters 1 according to the embodiments described above. For example, as described above, in implementing the beam forming through multiple antenna sub-arrays, the phase shifter 1 according to an embodiment of the present disclosure may function as a single component included in a communication device that enables more efficient beam forming by changing the physical length of the transmission line.

In this way, the phase shifter 1 and the communication device including the same according to an embodiment of the present disclosure are arranged very slimly without taking up much space above the top of the base panel 10, and enable the horizontal reciprocation moving, so that they provide such an advantage that the phase difference can be precisely adjusted, maximizing the space utilization of a product.

In the above, the phase shifter and the communication device including the same according to an embodiment of the present disclosure have been described in detail with reference to the accompanying drawings. However, it should be taken for granted that the embodiments of the present disclosure are not necessarily limited to the above-described embodiment, and various modifications and implementation within the equivalent scope are possible by those skilled in the art to which the present disclosure pertains. Therefore, it should be understood that the true scope of the right of the present disclosure is determined by the claims described later.

### [industrial Applicability]

The present disclosure provides the phase shifter and the communication device including the same, which can be miniaturized and weight reduced, which enable the precise phase difference adjustment since the set of reduction gears is equipped thereto so as to precisely reciprocate and horizontally move the movable rod, and which can maximize the space utilization of the product since the phase shift switching part can be placed slimly on the base panel.

## Claims

1. A phase shifter comprising:
a base panel;
a fixed substrate which is laminated and fixed on one side or another side on the base panel and has a plurality of circuit patterns printed on the top surface thereof; and
a phase shift switching part provided with a plurality of movable substrates including movable trip terminals which are in contact with the plurality of circuit patterns of the fixed substrate, wherein the phase shift switching part is configured to reciprocate the plurality of movable substrates within a predetermined distance in a horizontal direction on the base panel to change the positions of contact points of the movable substrates with respect to the circuit patterns,
wherein the phase shift switching part moves the plurality of movable substrates while always elastically supporting the plurality of movable substrates toward the circuit patterns.

2. The phase shifter of claim 1, wherein the plurality of circuit patterns are printed on the fixed substrate in a form in which the length of a transmission line is changed according to a change in the contact point position of the movable substrate.

3. The phase shifter of claim 2, wherein the plurality of circuit patterns are formed to branch from one input terminal to two output terminals, and
wherein a movable strip terminal of the movable substrate changes the length of the transmission line leading to the two branched output terminals.

4. The phase shifter of claim 1, wherein the phase shift switching part includes:
a plurality of movable substrate installing parts with end portions on which the plurality of movable substrates are seated and installed, respectively;
a module rod connecting the plurality of movable substrate installing parts in module units;
a movable rod extending straight from the module rod in the reciprocation moving direction; and
a moving drive part which moves the movable rod in the reciprocation moving direction.

5. The phase shifter of claim 4, wherein the fixed substrate is distributively disposed as one side fixed substrate and another side fixed substrate on both opposite sides of the moving drive part located in the central region of the base panel in the reciprocation moving direction,
wherein the plurality of movable substrate installing parts and the module rods are provided adjacent to the one side fixed substrate and said another side fixed substrate, respectively, and
wherein the movable rod receives a driving force from the moving drive part, and simultaneously moves the plurality of movable substrate installing parts in the same direction.

6. The phase shifter of claim 4,
wherein an elastic member is interposed between the plurality of movable substrate installing parts and the movable substrate to elastically support the movable substrate toward the circuit pattern.

7. The phase shifter of claim 6, wherein the elastic member includes a leaf spring.

8. The phase shifter of claim 4, wherein the moving drive part includes:
a drive motor driven electrically;
a set of reduction gears that receives a driving force from the drive motor and reduces speed; and
a rack gear part having rack gear teeth formed on one side thereof, and provided on the movable rod such that one gear of the set of reduction gears meshes with the rack gear teeth.

9. The phase shifter of claim 8, wherein the drive motor is provided as a step motor capable of controlling rotation in one direction or another direction.

10. The phase shifter of claim 8, wherein the set of reduction gears includes a combination of a plurality of parallel gears meshed with each other in various combinations of gear ratios, and is provided in a gear box.

11. The phase shifter of claim 10, wherein the set of reduction gears includes a worm wheel gear including worm wheel gear teeth provided to mesh with a worm gear coupled to the rotation shaft of the drive motor.

12. The phase shifter of claim 4, wherein on the base panel, at least one guide bracket is installed to prevent the movable rod from being deviated and to guide the reciprocation moving of the movable rod.

13. A communication device including a phase shifter according to any one of claims 1 to 5.
